# EUROPEAN PATENT SPECIFICATION

(11) **EP 1 565 660 B1**
(45) Date of publication and mention of the grant of the patent: **20.10.2010**
(21) Application number: 03783008.0
(22) Date of filing: 17.11.2003
(51) Int. Cl.: F28F 5/00

(54) **A HOLDING DEVICE**
HALTEVORRICHTUNG
DISPOSITIF DE MAINTIEN

(30) Priority: 15.11.2002 SE 0203404
(43) Date of publication of application: 24.08.2005
(73) Proprietor: Svensson, Jan-Erik, 568 32 Skillingaryd (SE)
(72) Inventor: Svensson, Jan-Erik, 568 32 Skillingaryd (SE)
(74) Representative: Engström, Christer
(86) International application number: PCT/SE2003/001785
(87) International publication number: WO 2004/070215

(56) References cited:
- GB-A- 691 445
- US-A- 1 279 297
- US-A- 4 234 147
- US-A- 5 096 327

## Description

The present invention relates to a device for holding and fastening an object, as a shaft or a bearing for a shaft, and comprises a holder showing projecting parts or shanks and a suspension device which is meant to be a part of or is a part of a construction and to which suspension device the holder is intended to be arranged and at this to hold the holder for supporting the object or an end of the object, whereby end parts of the projecting parts or shanks are arranged to be able to reach through the suspension device and be in engagement with and influenced by the device comprising first operating means for displacement of said object in opposite directions.

In constructions where, for example, rotary shafts are included, there is often a need to be able to adjust the centre for the shaft. Further, there is a need to be able to simplify the manufacture of devices or constructions which are to support a shaft or another component which can require to be subjected to a centering.

Devices for adjusting of shafts exist but they are complicated in shaping and also in use and proportionately expensive. In order to avoid the need to require to use adjusting means, devices and constructions, in which shafts are included, they are manufactured in an unnecessary complicated or non.rational way. In stands, for example, where shafts are included, the openings or holes are shaped afterwards in the stand for a shaft or bearing for a shaft, i.e. after that the stand for the rst is completed manufactured and completed treated. Desirable would be, however, that one would be able to arrange the openings or holes for a shaft already during the shaping of the stand or those parts which will be included in the stand and which later will hold a shaft. If so is done, however, the precision will be lost and at worse the finished stand cannot be used for its purpose. That depends on the fact that the stands after the manufacturing will be subjected to different kinds of after-treatments having the result that the material is heated up. One example of such an aftertreatment can be assemblage of parts, apparatus, etc. to the stand by welding. Another example can be lacquering of the stand, especially when powder coating is applied as the stand is heated to a proportionately high temperature. At this, the centre for openings or holes for shafts, for example, will be moved at least some and this must in some way be adjusted. The reason of said removal of the centre is due to that fact that tensions in the material, joints, weldings, etc. are released.

One object of a device in accordance with the invention is that one during manufacture of parts or constructions, as a stand, will be able to shape openings or holes to be during the very manufacturing process, i.e. to be able to complete the part or construction before any after-treatments. In other words avoiding finishing of the part or construction gradually, i.e. after existing after-treatments.

Another object of a device in accordance with the invention is that one will be able to effect any adjustments that may arise of the centre for, for example, shafts, openings, holes or other parts requiring a centering. Such adjustments will be able to he realized in simple way with a proportionately simple device and at low cost.

It is known from US-A-4 234 147 an inexpensive shaft-clamping device which will fixedly frictionally engage the shaft, or a pipe, to Another, secondary, member for non-rotational movement therebetween. The device shows a "loop-bolt" having threaded leg portions to accommodate clamping nuts. Such leg portions project through mounting apertures provided in the secondary member. The loop-bolt consists of a rod-member which is meant to be wrapped around the shaft in a spiral relationship and thus encircle the shaft. Preferably, the rod-member is threaded in its entirity to improve the friction that prevents rotation between shaft and secondary member. As the loop-bolt is entirely threaded the threads not only effect a biting action between the loop-bolt and the encicled shaft, but, additionally the threads disposed at the end of the legs enable a ready attachment of the clamping nuts. This device is just a shaft-clamping device and has no possibilities for adjustment laterally and vertically of the shaft after the clamping but only a release of the frictional engagement and also a reestablishment of the engagement. The device is an improvement compared with a standard "U" bolt known from US-A-1 279 297. This because of the double wrap since that results approximately three times as much contacting surface to develop a means of rigidly fastening of a secondary member to a round shaft in order to prevent relative rotation between the shift and the secondary member.

US-A-1 279 297 shows a pipe clamp consisting of a strap and an U-shaped member surrounding the pipe with its two ends projecting through openings in the strap end threaded to receive nuts. The pipe is fixed by said strap.

The device shown in said prior documents lack i.a. a holder element with an opening to hold and fasten a shaft or similar. Further, a second operating means meant to be in engagement with a suspension device in order to influence the holder element showing, in addition, a reception part for said second operating means. A device showing such a shaping is able to adjust a shaft or similar laterally and vertically or displace the shaft in opposite side-directions or corresponding and also upwards and downwards.

A device in accordance with the invention is characterized in that the suspension device shows engagement means for a second operating means consisting of an influencing means arranged to be able to influence the holder which comprises a holder element with an opening or a through hole for said object and a reception part for the second operating means, whereby an object in the holder element can be attached or locked and be displaced in a direction perpendicular to said opposite directions.

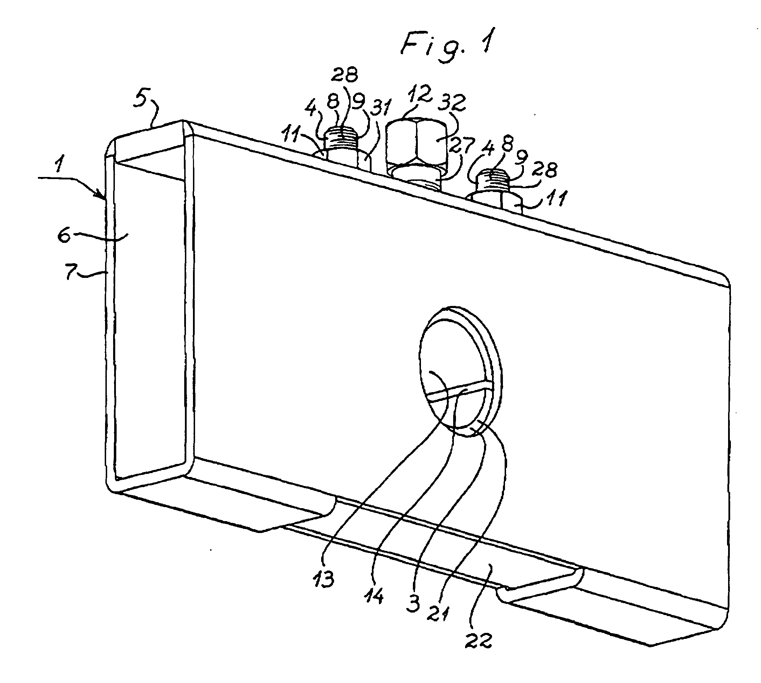

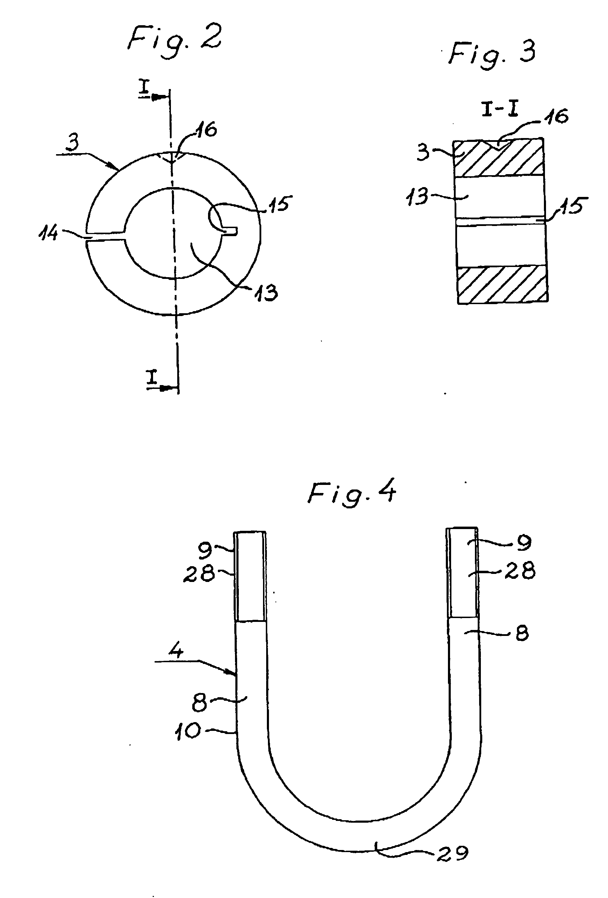

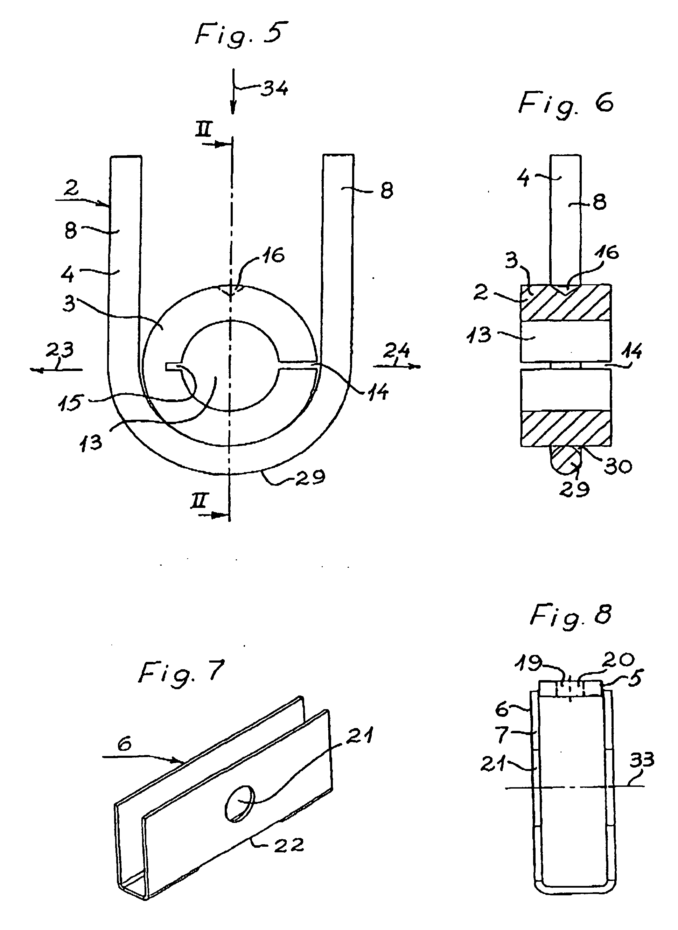

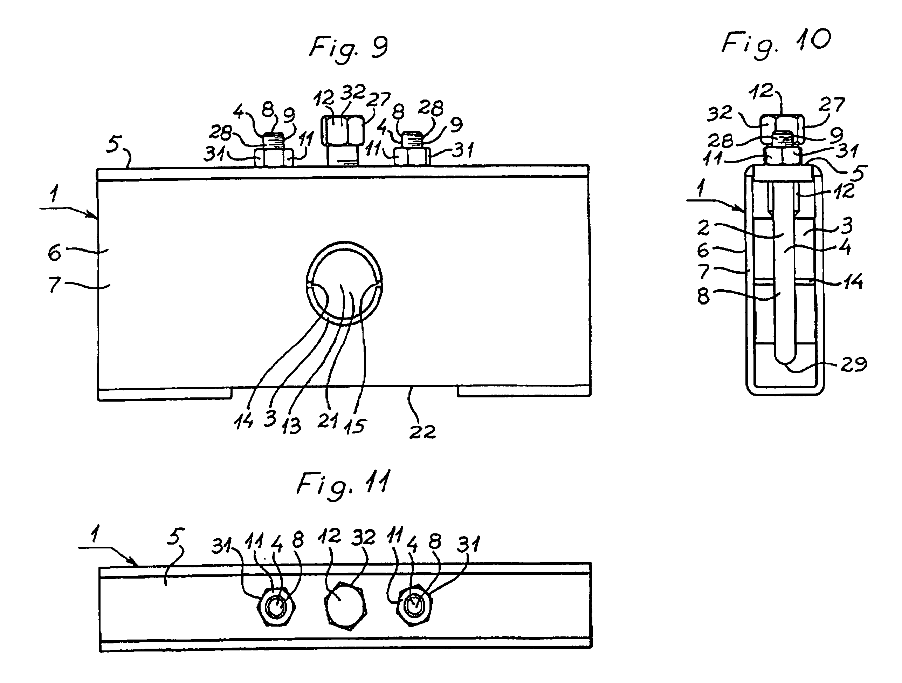

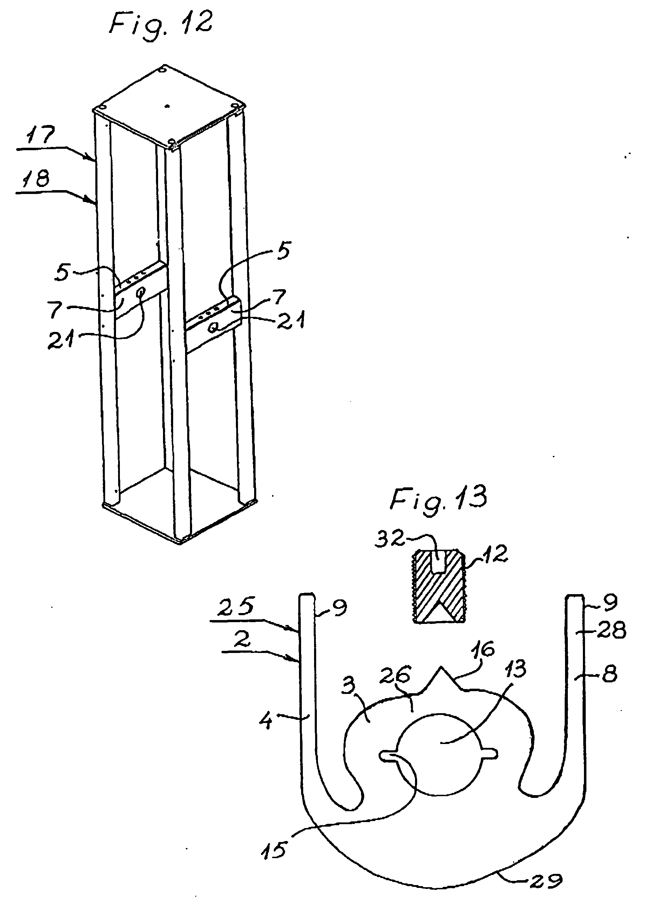

Further characteristics of and advantages with a device in accordance with the invention will in the following description of the invention be apparent by embodiment examples, whereby a simultaneously reference will be made to the accompanying, schematic drawings, of which Fig. 1 shows in a perspective view an example of a first embodiment of a device in accordance with the invention, Fig. 2 shows from one side a holder element according to one embodiment, Fig. 3 shows a cross-section according to section I - I of the holder element in Fig. 2, Fig. 4 shows from one side a holder member in the form of an U-shaped member according to one embodiment, Fig. 5 shows from one side a holder according to one embodiment and which is included in the device in accordance with the invention, Fig. 6 shows a cross-section according to section II - II of the holder in Fig. 5, Fig. 7 shows in a perspective view a housing which is included in a bracket, Fig. 8 shows from one side a bracket with a suspension device according to one embodiment, Fig. 9 shows from one side a device in accordance with the invention, Fig. 10 shows from another side the device according to Fig. 9, Fig. 11 shows from above the device in Figs. 9 and 10, Fig. 12 shows in a perspective view an example of a construction or a stand into which a device in accordance with the invention can be included and Fig. 13 shows from one side an example of a holder according to a second embodiment.

With the reference designation 1 in Fig. 1 is shown an embodiment of a device in accordance with the invention which, according to the embodiment shown, is arranged in a housing 6 forming a bracket 7 which is intended to be arranged in a construction 17, as a stand 18, see Fig. 12. Examples of said housing 6 and bracket 7 is evident from Figs. 7 and 8 respectively.

The shown stand 18 consists of a frame for a rotor to a heat exchanger and which will be equipped with i.a. a shaft for a rotating part in the heat exchanger. It is of importance that the rotating part is carried in intended position, as tightening will be done against the rotating part and in this respect in order to avoid tightening problems with accompanying air leakage. This can in a fully satisfactory and simple way be secured by using a device in accordance with the invention. The housing 6 and the bracket 7 are, according to the shown and described area of use, adapted for installation into the stand 18 during its manufacture after which a device in accordance with the invention easily can be arranged to the stand 18 after its manufacture and finished treatment. In this case, a suspension device 5 is included in the bracket 7 for a holder 2 and that a through opening 21 is arranged through the walls of the bracket 7 for the shaft and an opening 22 for the arranging of the holder 2 in the bracket 7. With the reference designation 33 in Fig. 8 is schematically shown the centre for the said opening 21 for the shaft. A bracket 7 according to a second embodiment is included in the device 1 which is shown in Figs. 9 - 11.

The device in accordance with the invention can be arranged and used in other constructions and in applicable cases be arranged in a bracket 7 with an adapted shape after the construction or with the holder 2 arranged alone in other constructions with a suspension device 5 which can be included or be arranged in the construction.

The said holder 2, shown in one embodiment in Figs. 5 and 6, comprises a holder element 3 and a holder member 4 which are arranged in a fixed connection with one another by means of a joint 30, as a weld.

The said holder element 3, which is also evident from Figs. 2 and 3, is in form of a sleeve, ring or similar with an opening 13 or a through hole for holding, carrying or the like of an object, as a shaft. According to the embodiment example shown, the holder element 3 shows a slot 14 or breaking through through the wall of the holder element 3 and in its length. Further, the holder element 3 shows a recess 15 in its length. The holder element 3 can show more such recesses 15 and such a recess 15 instead of the said slot 14. With the reference designation 16 is shown a reception part for a second operating means 12 which, in applicable cases, is part of the device 1 or the holder 2 and can be arranged in contact or engagement with the holder element 3.

The said holder member 4, which is also evident from Fig. 4, forms a holder device or a cradle of some sort for the holder element 3. The holder member 4, according to the shown embodiment example, is formed of an U-shaped member 10 with projecting parts 8 or shanks with a web 29 in the shape of a bow or a curved section. The end parts 28 of the projecting parts 8 or shanks are arranged with connection means 9 or according to the embodiment example shown a thread for first operating means 11.

As previously mentioned, the device 1 or the holder 2 can be arranged in a housing 6 or a bracket 7 which is arranged or will be arranged in a construction 17. Irrespective of which, the device 1 comprises a suspension device 5 for the holder 2.

According to the embodiment examples, the suspension device 5 shows through holes 19 for the projecting parts 8 or shanks of the holder member 4 to run through or for running through of their end parts 28. Further, the suspension device 5 shows a hole 20 with a thread or another engagement means for the second operating means 12. Said holes 19, 20 in the suspension device 5 are illustrated in Fig. 8.

For the mounting of the holder 2 in a housing 6 or a bracket 7, the housing or the bracket shows, as said, an opening 22 through which the holder 2 can be introduced and be arranged or be anchored to the suspension device 5 and in that respect so that the opening 13 or through hole of the holder 2 is situated in front of the through openings 21 in the side walls of the housing 6 or the bracket 7. Through the opening 22 is attained access to the holder 2 and/or possibility to dismounting of the holder 2 if it would be necessary for maintenance, exchange or the like.

A holder 2, arranged or anchored to a suspension device 5 in a housing 6 or bracket 7, is evident from Figs. 1, 9, 10 or 11, whereby said first and second operating means 11 and 12 respectively are evident. According to the embodiment example, the first operating means 11 is in form of a nut or similar which is treaded on to the end parts 28 or their connection means 9 or thread of the holder 2 or the projecting parts 8, whereby the suspension device 5, in applicable cases, forms holder-on for the influence on the holder member 4 of the first operating means 11 and by that also on the holder element 3 och by that on the centre or the centre axis for the holder 2 or holder element 3, i.e. to move the centre for an object or the axis for a shaft which is arranged, carried or attached in the device 1, holder 2 or holder element 3. With the reference designation 31 is shown a hold in the first operating means 11 or nut.

The said second operating means 12 is, according to the embodiment example shown, in form of a screw 27, bolt, threaded pin or similar for influence on the holder element 3 in order to move the centre or the centre axis of the holder 2 or the holder element 3, i.e. to move the centre for an object or the axis for a shaft which is arranged, carried or attached in the device 1, holder 2 or holder element 3 or for locking of the object or the shaft in the device 1, holder 2 or holder element 3 by the existence of the said slot 14 and the recess or the said recesses 15.

When influenced, as when subjected to tensile stress, on a projecting part 8 by means of the one of the first operating means 11 on the one of the projecting parts 8 during simultaneous slackening of the other of the projecting parts 8, the centre is displaced laterally for the opening 13 in the holder element 3 and by that for an object situated in the device 1 or holder element 3, see the arrow 23 in Fig. 5. By influence, as by a tensile stress, on the other projecting part 8 by means of the other of the said one first operating means 11 on the other of the projecting parts 8, the centre is displaced laterally in opposite direction for the opening 13 in the holder element 3 and by that for an object situated in the device 1 or holder element 3, see the arrow 24 in Fig. 5.

By means of the second operating means 12, an object in the device 1 or in the holder element 3 can be attached or locked or in applicable case be moved in a direction perpendicular to the said one and the other directions 23, 24 or said side-directions or upwards or downwards in the device 1 or holder 2, see the arrow 34 in Fig. 5. With the reference designation 32 is shown a hold in the second operating means 12 or screw.

Thus, to effect a displacement of the centre for an object, as a shaft, the holder for the object shows an opening or a through hole for an object to run through the holder for supporting and/or carrying the object or an end of the object. Said holder is provided with two projecting parts or shanks, whose end parts are intended to extend through and pass a suspension device for the holder in order to be able to be influenced by first operating means, whereby when influenced, as subjected to a tensile stress, on one said shank during a slackening of the other said shank, the holder, a holder part, the said opening or the said through hole is brought to a displacement in one direction or one side-direction and when influenced, as subjected to a tensile stress, on the said other shank during a slackening of the said one shank, the holder, a holder part, the said opening or said through hole is brought to a displacement in another or an opposite direction or side-direction as regards the said one direction, whereby the centre or the axis for an object reaching through the opening or through hole simultaneously is going to be displaced in said directions.

Further, the device can comprise additional displacements of the centre for an object, as a shaft.
Thus, a second operating means is arranged in the said suspension device for the holder and is brought to influence a holder element or a material part showing the said opening or through hole to a displacement or a squeezing up or a yielding, whereby the centre for an object reaching through the opening or through hole simultaneously is going to be displaced perpendicular to the said one and the other side-directions or upwards or downwards in that device where the method is applied.

According to one embodiment, the device 1 or the holder 2 consists of metal or metal alloys.

In Fig. 13 is shown a holder 2, 25 according to a second embodiment and which is shaped in one piece, for example of sheet-metal, as stamped out from a plate 6 ml, thick and with stamped thread 9 or another connection means. This holder 25 can for example be welded or screw on, for example, a profile which is attached to the construction 17. As second operating means 12 can a screw (M 16) be used with a hold 30 for a tool to and in order to influence the centre of the opening 13 or hole in one or opposite directions and across the directions 23 and 24. A material part 26 is forming or comprising the holder element 3 and surrounding, adjoining to or defines the opening 13 or the through hole.

The holder element 3 for holding the shaft or adjustable bearing box, if any, if one arranges or (places) a ball bearing. Locking can be done with a lock nut or another locking means. The first operating means 11 can consist of for example lock nuts and in applicable cases with plastic lining in order to not change setting/draw because of vibrations.

Without exceeding the scope of the concept of the invention, modifications of the device should be possible. Thus, the said object can consist of a shaft. The said construction can consist of another kind than a stand, for example different kind of supports, suspension devices, etc. for objects or where objects are included and which can need to be set and/or adjusted gradually or during use. An application of the device and which probably has appeared previously is to use the device in a bearing box or corresponding to mount a shaft in bearings. The holder device can be said to form an adjustment device for objects, a shaft fixing, a setable and/or adjustable shaft fastening or similar. The device in accordance with the invention is thus not restricted to what has been shown and described in connection with the embodiment examples but soley by following claims.

## Claims

1. A device for holding and fastening an object, as a shaft or a bearing for a shaft, and comprises a holder (2, 25) showing projecting parts (8) or shanks and a suspension device (5) which is meant to be a part of or is a part of a construction (17) and to which suspension device (5) the holder (2, 25) is intended to be arranged and at this to hold the holder (2, 25) for supporting the object or an end of the object, whereby end parts (28) of the projecting parts (8) or shanks are arranged to be able to reach through the suspension device (5) and be in engagement with and influenced by the device (1) comprising first operating means (11) for displacement of said object in opposite directions (23, 24), **characterized in that** the suspension device (5) shows engagement means (20) for a second operating means (12) consisting of an influencing means arranged to be able to influence the holder (2, 25) which comprises a holder element (3) with an opening (13) or a through hole for said object and a reception part (16) for the second operating means (12), whereby an object in the holder element (3) can be attached or locked and be displaced in a direction (34) perpendicular to said opposite directions (23, 24).

2. A device in accordance with claim 1, **characterized in that** one of the said projecting parts (8) or shanks is arranged, when influenced or subjected to a tensile stress of a first operating means (11), to displace the centre of the said opening (13) or hole in one direction (23) or laterally and another of the projecting parts (8) or shanks is arranged, when influenced or subjected to a tensile stress of a first operating means (11), to displace the centre of the said opening (13) or hole in another or the opposite direction (24) or laterally.

3. A device in accordance with claim 1 or 2, **characterized in that** said second operating means (12) is arranged in order to lock an object reaching through the opening (13) or hole and to influence said opening (13) or hole to a displacement of its centre in one or opposite directions, whereby the centre for an object reaching through the opening (13) or hole simultaneously is going to or will be displaced.

4. A device in accordance with claim 1, 2 or 3, **characterized in that** when a first operating means (11) is influenced or subjected to a tensile stress, the said one projecting part (8) is arranged to displace the centre for the said opening (13) in one side-direction (23) or corresponding and the said other projecting part (8) is arranged to displace the centre for the said opening (13) in another or an opposite side-direction (24) or corresponding and that the said second operating means (12) is arranged, when influenced, to displace the centre for the said opening (13) perpendicular to said one and the other side-directions (23, 24) or upwards and downwards in the device (1).

5. A device in accordance with claim 1, 2, 3 or 4, **characterized in that** the said holder (2, 25) is substantially U-shaped, whereby the said projecting parts (8) or shanks form legs in said U-shape and the said opening (13) or through hole is arranged in a material part (26) or a body arranged between said projecting parts (8) or shanks and near to or in connection with a curved section (29) in the lower part of the projecting parts (8) or shanks or in said U-shape forming a web in the U-shaped holder.

6. A device in accordance with claim 1, 2, 3 or 4, **characterized in that** the said holder (2) is composed of a holder element (3) in form of a bushing, a ring- or tube-shaped body or sleeve and a holder member (4) in form of a bowed member (10) or into U-shape or essentially U-shape formed member (10) showing at a distance from one another extending shanks (8) connected with each other by a web (29) shaped to a curve in the member (10) or in the U-shape, whereby the holder element (3) is arranged in the holder (2) near to the lower part of the shanks (8) and/or in connection with said curved portion (29) of the holder member (4) and arranged connected with the holder member (4), for example in at least a firm joint (30) as into a stiff connection between the holder element (3) and the holder member (4) effected by a weld.

7. A device in accordance with any of the preceding claims, **characterized in that** the said holder element (3) shows a slot (14) or a similar break-through through the wall of the holder element (3) and/or one or more recesses (15), grooves or the like which open into the said opening (13), whereby said slot (14) and/or recess (15) are/is arranged to be able to lock or facilitate locking of a shaft running through the opening (13).

8. A device in accordance with claim 1, 2, 3 or 4, **characterized in that** the holder (2, 25) is shaped in one piece, for example of sheet-metal or cut out or stamped out from a plate, whereby at least end parts (28) of the projecting parts (8) or shanks are shaped with connection means (8), for example in form of stamped or punched threads in the material for first operating means (11).

9. A device in accordance with claim 8, **characterized in that** a material part (26) surrounding or adjoining the said opening (13) or hole shows one or more recesses (15), grooves or the like which open into the said opening (13), whereby said recess (15) is arranged to be able to lock or facilitate locking of a shaft running through the opening (13).

10. A device in accordance with any of the preceding claims, **characterized in that** at least end parts (28) of the projecting parts (8) or shanks in the holder (2, 25) are arranged with connecting means (9) for first operating means (11), for example, in form of threads for engagement means in form of nuts or the like and that second operating means (12) consist of, for example, a screw (27), bolt, threaded pin or a similar influencing means arranged to able to influence the holder (2, 25) to a displacement of the centre for the said opening (13) or hole.

## Patentansprüche

1. Vorrichtung zum Halten und Befestigen eines Gegenstands wie etwa einer Welle oder eines Lagers für eine Welle, umfassend eine Halterung (2, 25), die vorspringende Teile (8) oder Schäfte zeigt, und eine Aufhängevorrichtung (5), die ein Teil eines Aufbaus (17) sein soll oder ein Teil davon ist und an welcher Aufhängevorrichtung (5) die Halterung (2, 25) angeordnet werden soll und an der die Halterung (2, 25) gehalten werden soll, um den Gegenstand oder ein Ende des Gegenstands zu stützen, wobei Endteile (28) der vorspringenden Teile (8) oder Schäfte so angeordnet sind, dass sie fähig sind, durch die Aufhängevorrichtung (5) zu reichen und mit der Vorrichtung (1), welche erste Betätigungsmittel (11) zum Verschieben des Gegenstands in entgegengesetzte Richtungen (23, 24) umfasst, in Eingriff zu stehen und **dadurch** beeinflusst zu werden, **dadurch gekennzeichnet, dass** die Aufhängevorrichtung (5) ein Eingreifmittel (20) für ein zweites Betätigungsmittel (12) umfasst, welches aus einem Beeinflussungsmittel besteht, das so angeordnet ist, dass es fähig ist, die Halterung (2, 25), welche ein Halterungselement (3) mit einer Öffnung (13) oder einem Durchgangsloch für den Gegenstand und einen Aufnahmeteil (16) für das zweite Betätigungsmittel (12) umfasst, zu beeinflussen, wobei ein Gegenstand im Halterungselement (3) angebracht oder gesperrt und in eine Richtung (34), die rechtwinkelig zu den entgegengesetzten Richtungen (23, 24) verläuft, verschoben werden kann.

2. Vorrichtung nach Anspruch 1, **dadurch gekennzeichnet, dass** einer der vorspringenden Teile (8) oder Schäfte so angeordnet ist, dass er die Mitte der Öffnung (13) oder des Lochs in eine Richtung (23) oder seitlich verschiebt, wenn er beeinflusst wird oder einer Zugspannung eines ersten Betätigungsmittels (11) ausgesetzt ist, und ein anderer der vorspringenden Teile (8) oder Schäfte so angeordnet ist, dass er die Mitte der Öffnung (13) oder des Lochs in eine andere oder die entgegengesetzte Richtung (24) oder seitlich verschiebt, wenn er beeinflusst wird oder einer Zugspannung eines ersten Betätigungsmittels (11) ausgesetzt ist.

3. Vorrichtung nach Anspruch 1 oder 2, **dadurch gekennzeichnet, dass** das zweite Betätigungsmittel (12) angeordnet ist, um einen Gegenstand, der durch die Öffnung (13) oder das Loch reicht, zu sperren und die Öffnung (13) oder das Loch zu einer Verschiebung ihrer bzw. seiner Mitte in eine Richtung oder entgegengesetzte Richtungen zu beeinflussen, wobei die Mitte eines Gegenstands, der durch die Öffnung (13) oder das Loch reicht, gleichzeitig verschoben wird oder verschoben werden wird.

4. Vorrichtung nach Anspruch 1, 2 oder 3, **dadurch gekennzeichnet, dass** der eine vorspringende Teil (8) so angeordnet ist, dass er die Mitte der Öffnung (13) in die Richtung einer Seite (23) oder entsprechend verschiebt, und der andere vorspringende Teil (8) so angeordnet ist, dass er die Mitte der Öffnung (13) in eine andere Richtung oder eine Richtung zur entgegengesetzten Seite (24) oder entsprechend verschiebt, wenn ein erstes Betätigungsmittel (11) beeinflusst wird oder einer Zugspannung ausgesetzt ist, und dass das zweite Betätigungsmittel (12) so angeordnet ist, dass es die Mitte der Öffnung (13) in der Vorrichtung (1) rechtwinkelig zu den Richtungen der einen und der anderen Seite (23, 24) oder aufwärts und abwärts verschiebt, wenn es beeinflusst wird.

5. Vorrichtung nach Anspruch 1, 2, 3 oder 4, **dadurch gekennzeichnet, dass** die Halterung (2, 25) im Wesentlichen U-förmig ist, wobei die vorspringenden Teile (8) oder Schäfte Schenkel in der U-Form bilden, und die Öffnung (13) oder das Durchgangsloch in einem Materialteil (26) oder Körper, der zwischen den vorspringenden Teilen (8) oder Schäften eingerichtet ist, und nahe an oder in Verbindung mit einem gekrümmten Abschnitt (29) im unteren Teil der vorspringenden Teile (8) oder Schäfte oder in der U-Form, die einen Steg in der U-förmigen Halterung bildet, angeordnet ist.

6. Vorrichtung nach Anspruch 1, 2, 3 oder 4, **dadurch gekennzeichnet, dass** die Halterung (2) aus einem Halterungselement (3) in Form einer Lagerbuchse, eines ring- oder röhrenförmigen Körpers oder einer Hülse und einem Halterungselement (4) in Form eines bogenförmigen Elements (10) oder eines zu einer U-Form oder einer wesentlichen U-Form ausgeführten Elements (10), das sich voneinander beabstandet erstreckende Schäfte (8) zeigt, die durch einen zu einer Krümmung im Element (10) oder in der U-Form geformten Steg (29) miteinander verbunden sind, besteht, wobei das Halterungselement (3) in der Halterung (2) nahe am unteren Teil der Schäfte (8) und/oder in Verbindung mit dem gekrümmten Abschnitt (29) des Halterungselements (4) angeordnet ist und zum Beispiel durch zumindest eine feste Verbindung (30) wie etwa eine durch eine Schweißung bewerkstelligte steife Verbindung zwischen dem Halterungselement (3) und dem Halterungselement (4) mit dem Halterungselement (4) verbunden angeordnet ist.

7. Vorrichtung nach einem der vorhergehenden Ansprüche, **dadurch gekennzeichnet, dass** das Halterungselement (3) einen Schlitz (14) oder einen ähnlichen Durchbruch durch die Wand des Halterungselements (3) und/oder eine oder mehrere Ausnehmungen (15), Auskehlungen oder dergleichen, die sich in die Öffnung (13) öffnen, zeigt, wobei der Schlitz (14) und/oder die Ausnehmung (15) so angeordnet ist/sind, dass sie fähig ist/sind, eine durch die Öffnung (13) verlaufende Welle zu sperren oder ihr Sperren zu erleichtern.

8. Vorrichtung nach Anspruch 1, 2, 3 oder 4, **dadurch gekennzeichnet, dass** die Halterung (2, 25) in einem Stück zum Beispiel aus einem Blech geformt ist oder aus einer Platte geschnitten oder gestanzt ist, wobei zumindest Endteile (28) der vorspringenden Teile (8) oder Schäfte mit Verbindungsmitteln (8) zum Beispiel in der Form ausgestanzter oder gestanzter Gewinde im Material für die ersten Betätigungsmittel (11) geformt sind.

9. Vorrichtung nach Anspruch 8, **dadurch gekennzeichnet, dass** ein Materialteil (26), der die Öffnung (13) oder das Loch umgibt oder daran angrenzt, eine oder mehrere Ausnehmungen (15), Auskehlungen oder dergleichen zeigt, die sich in die Öffnung (13) öffnen, wobei die Ausnehmung (15) so angeordnet ist, dass sie fähig ist, eine durch die Öffnung (13) verlaufende Welle zu sperren oder ihr Sperren zu erleichtern.

10. Vorrichtung nach einem der vorhergehenden Ansprüche, **dadurch gekennzeichnet, dass** zumindest Endteile (28) der vorspringenden Teile (8) oder Schäfte in der Halterung (2, 25) mit Verbindungsmitteln (9) für die ersten Betätigungsmittel (11) zum Beispiel in der Form von Gewinden für Eingreifmittel in der Form von Muttern oder dergleichen eingerichtet sind, und dass das zweite Betätigungsmittel (12) zum Beispiel aus einer Schraube (27), einem Bolzen, einem Gewindestift oder einem ähnlichen Beeinflussungsmittel besteht, das so eingerichtet ist, dass es fähig ist, die Halterung (2, 25) zu einer Verschiebung der Mitte der Öffnung (13) oder des Lochs zu beeinflussen.

## Revendications

1. Dispositif de maintien et de serrage d'un objet, tel qu'un arbre ou un palier d'arbre, et comprenant un support (2, 25) présentant des parties en saillie (8) ou des tiges de rivet et un dispositif de suspension (5) qui est destiné à faire partie ou fait partie d'une construction (17) et sur lequel dispositif de suspension (5), le support (2, 25) est destiné à être agencé et le support (2, 25) est ensuite maintenu pour supporter l'objet ou une extrémité de l'objet, sachant que des parties d'extrémité (28) des parties en saillie (8) ou des tiges de rivet sont agencées pour être capables de traverser le dispositif de suspension (5) et être en engagement avec le dispositif (1) et influencé par celui-ci, comprenant un premier moyen de fonctionnement (11) pour le déplacement dudit objet dans des directions opposées (23, 24), **caractérisé en ce que** le dispositif de suspension (5) présente un moyen d'engagement (20) pour un deuxième moyen de fonctionnement (12) consistant en un moyen d'influence agencé pour être capable d'influencer le support (2, 25) qui comprend un élément de support (3) avec une ouverture (13) ou un trou traversant pour ledit objet et une partie de réception (16) pour le deuxième moyen de fonctionnement (12), sachant qu'un objet dans l'élément de support (3) peut être fixé ou verrouillé et peut être déplacé dans une direction (34) perpendiculaire auxdites directions opposées (23, 24).

2. Dispositif selon la revendication 1, **caractérisé en ce que** l'une desdites parties en saillie (8) ou tiges de rivet est agencée, lorsqu'elle est influencée ou soumise à un effort de traction d'un premier moyen de fonctionnement (11), pour déplacer le centre de ladite ouverture (13) ou dudit trou dans une direction (23) ou latéralement et une autre des parties en saillie (8) ou tiges de rivet est agencée, lorsqu'elle est influencée ou soumise à un effort de traction d'un premier moyen de fonctionnement (11), pour déplacer le centre de ladite ouverture (13) ou dudit trou dans une autre direction ou la direction opposée (24) ou latéralement.

3. Dispositif selon la revendication 1 ou 2, **caractérisé en ce que** ledit deuxième moyen de fonctionnement (12) est agencé pour verrouiller un objet traversant l'ouverture (13) ou le trou et pour influencer ladite ouverture (13) ou ledit trou vers un déplacement de son centre dans une direction ou la direction opposée, sachant que le centre d'un objet traversant l'ouverture (13) ou le trou va être ou sera simultanément déplacé.

4. Dispositif selon la revendication 1, 2 ou 3, **caractérisé en ce que** lorsqu'un premier moyen de fonctionnement (11) est influencé ou soumis à un effort de traction, ladite une partie en saillie (8) est agencée pour déplacer le centre pour ladite ouverture (13) dans une direction d'un côté (23) ou correspondante et ladite autre partie en saillie (8) est agencée pour déplacer le centre pour ladite ouverture (13) dans une autre direction latérale ou une direction latérale opposée (24) ou correspondante et que ledit deuxième moyen de fonctionnement (12) est agencé, lorsqu'influencé, pour déplacer le centre pour ladite ouverture (13) perpendiculairement à ladite une direction et ladite autre direction latérale (23, 24) ou vers le haut et vers le bas dans le dispositif (1).

5. Dispositif selon la revendication 1, 2, 3 ou 4, **caractérisé en ce que** ledit support (2, 25) est essentiellement en U, sachant que lesdites parties en saillie (8) ou tiges de rivet forment des jambes dans ladite forme en U et ladite ouverture (13) ou ledit trou traversant est agencé(e) dans une partie de matériau (26) ou un corps agencé entre lesdites parties en saillie (8) ou tiges de rivet et près ou en liaison avec une section incurvée (29) dans la partie inférieure des parties en saillie (8) ou tiges de rivet ou dans ladite forme en U formant un filet dans le support en U.

6. Dispositif selon la revendication 1, 2, 3 ou 4, **caractérisé en ce que** ledit support (2) est composé d'un élément de support (3) en forme de douille, de corps en forme de bague ou de tube ou de manchon et d'un élément de support (4) en forme d'élément courbé (10) ou d'élément en U ou essentiellement en U (10) présentant, s'étendant à distance l'une de l'autre, des tiges de rivets (8) reliées l'une à l'autre par un filet (29) formé sur une courbe dans l'élément (10) ou dans la forme en U, sachant que l'élément de support (3) est agencé dans le support (2) près de la partie inférieure des tiges de rivet (8) et/ou en liaison avec ladite partie incurvée (29) de l'élément de support (4) et agencé en liaison avec l'élément de support (4), par exemple en au moins une jointure solide (30) comme dans une liaison rigide entre l'élément de support (3) et l'élément de support (4) effectuée par soudure.

7. Dispositif selon l'une des revendications précédentes, **caractérisé en ce que** ledit élément de support (3) présente une fente (14) ou une percée similaire à travers la paroi de l'élément de support (3) et/ou un ou plusieurs creux (15), rainures ou similaire qui débouche(nt) dans ladite ouverture (13), sachant que ladite fente (14) et/ou creux (15) sont/est agencé(s) pour être capable(s) de verrouiller ou de faciliter le verrouillage d'un arbre passant à travers l'ouverture (13).

8. Dispositif selon la revendication 1, 2, 3 ou 4, **caractérisé en ce que** ledit support (2, 25) est formé en une pièce, par exemple une feuille métallique ou une découpe ou un estampage dans une plaque, sachant qu'au moins les parties d'extrémité (28) des parties en saillie (8) ou tiges de rivet sont formées avec des moyens de liaison (8) par exemple en forme de filetages estampés ou poinçonnés dans le matériau du premier moyen de fonctionnement (11).

9. Dispositif selon la revendication 8, **caractérisé en ce qu'**une partie de matériau (26) entourant ou attenant à ladite ouverture (13) ou audit trou présente un ou plusieurs creux (15), rainures ou similaire qui débouche(nt) dans ladite ouverture (13), sachant que ledit creux (15) est agencé pour être capable de verrouiller ou de faciliter le verrouillage d'un arbre passant à travers l'ouverture (13).

10. Dispositif selon l'une des revendications précédentes, **caractérisé en ce qu'**au moins les parties d'extrémité (28) des parties en saillie (8) ou tiges de rivet dans le support (2, 25) sont munies de moyens de liaison (9) pour le premier moyen de fonctionnement (11), par exemple, en forme de filetages pour les moyens d'engagement en forme d'écrous ou similaire et que le deuxième moyen de fonctionnement (12) consiste, par exemple, en une vis (27), un boulon, une broche filetée ou un moyen similaire d'influence agencé pour être capable d'influencer le support (2, 25) vers un déplacement du centre pour ladite ouverture (13) ou ledit trou.
